# EUROPÄISCHE PATENTANMELDUNG

(11) **EP 3 015 747 A1**
(43) Veröffentlichungstag der Anmeldung: **04.05.2016**
(21) Anmeldenummer: 15191651.7
(22) Anmeldetag: 27.10.2015
(51) Int. Cl.: F16J 15/16, F16J 15/3232

(54) **DICHTUNGSANORDNUNG**

(30) Priorität: 29.10.2014 DE 102014222100
(71) Anmelder: Aktiebolaget SKF, 41 550 Göteborg (SE)
(72) Erfinder: Herbst, Hubert, 97503 Gädheim (DE); Gläntz, Wolfgang, 97422 Schweinfurt (DE); Heege, Thomas, 97526 Sennfeld (DE); Holsnijders, Jos, 4142 EN Leerdam (NL); Olschewski, Armin, 97422 Schweinfurt (DE); Peuschel, Thomas, 97453 Schonungen/Marktsteinach (DE); vom Stein, Hans-Joachim, 51519 Odenthal (DE)
(74) Vertreter: Kuhstrebe, Jochen

(57) **Zusammenfassung**

Die Erfindung betrifft eine Dichtungsanordnung (1) zur Abdichtung eines ersten Raums (A) gegenüber einem zweiten Raum (B), wobei die Dichtungsanordnung (1) einen an einem ersten Bauteil (2) angeordneten Dichtungsgrundkörper (3) aufweist, wobei der Dichtungsgrundkörper (3) mindestens zwei Dichtlippen (4, 5) trägt, wobei die Dichtlippen (4, 5) zum direkten oder indirekten radialen Anlauf an einem zweiten Bauteil (6) ausgebildet sind und wobei das zweite Bauteil (6) eine Drehachse mit einer axialen Richtung (a) aufweist. Um im Betrieb eine hohe Dichtwirkung aufrecht zu erhalten, dennoch aber die Reibung der Dichtungsanordnung zu minimieren, sieht die Erfindung vor, dass die erste Dichtlippe (4) und die zweite Dichtlippe (5) in axiale Richtung (a) voneinander beanstandet am zweiten Bauteil (6) anlaufen, wobei im Dichtungsgrundkörper (3) mindestens ein temperatursensibles Stellelement (7) angeordnet ist, das bei Temperaturerhöhung eine Formänderung erfährt, so dass sich zumindest die erste Dichtlippe (4) radial vom zweiten Bauteil (6) weg bewegt, wobei das temperatursensibles Stellelement (7) so angeordnet ist, dass sich die zweite Dichtlippe (5) weniger weit als die erste Dichtlippe (4) radial vom zweiten Bauteil (6) weg bewegt.

## Beschreibung

Die Erfindung betrifft eine Dichtungsanordnung zur Abdichtung eines ersten Raums gegenüber einem zweiten Raum, wobei die Dichtungsanordnung einen an einem ersten Bauteil angeordneten Dichtungsgrundkörper aufweist, wobei der Dichtungsgrundkörper mindestens zwei Dichtlippen trägt, wobei die Dichtlippen zum direkten oder indirekten radialen Anlauf an einem zweiten Bauteil ausgebildet sind und wobei das zweite Bauteil eine Drehachse mit einer axialen Richtung aufweist, wobei die erste Dichtlippe und die zweite Dichtlippe in axiale Richtung voneinander beanstandet am zweiten Bauteil anlaufen, wobei im Dichtungsgrundkörper mindestens ein temperatursensibles Stellelement angeordnet ist, das bei Temperaturerhöhung eine Formänderung erfährt, so dass sich zumindest die erste Dichtlippe radial vom zweiten Bauteil weg bewegt, wobei das temperatursensibles Stellelement so angeordnet ist, dass sich die zweite Dichtlippe weniger weit als die erste Dichtlippe radial vom zweiten Bauteil weg bewegt.

Dichtungsanordnungen dieser Art sind im Stand der Technik hinlänglich bekannt. Sie sind als Radialwellendichtungen ausgebildet, wobei die Dichtlippen reibend an einer Welle anliegen. Der Dichtungsgrundkörper ist mit einem Gehäuseabschnitt verbunden. Demgemäß wird im Gehäuseinneren ein abgedichteter Raum definiert, der gegenüber der Umgebung abgedichtet ist. Dieser Raum, in dem beispielsweise ein Wälzlager angeordnet sein kann, wird mit Schmiermittel, beispielsweise mit Schmierfett, gefüllt.

Eine gattungsgemäße Dichtungsanordnung ist aus der DE 10 2007 045 819 A1 bekannt. Eine andere Lösung mit einem temperatursensiblen Stellelement offenbart die DE 10 2011 086 954 A1**.**

Dichtungsanordnungen dieser Art werden beispielsweise in Radsatzlagern von Eisenbahnen oder Kraftfahrzeugen benötigt. Sie können als berührungslose (Spalt- bzw. Labyrinthdichtungen) oder gattungsgemäße berührende Dichtungen ausgebildet sein. Dabei kann die Dichtung direkt in ein (Wälz)Lager integriert sein oder als separate, externe Einheit eingesetzt werden. Dabei haben die beiden genannten Dichtungskonzepte - d. h. die berührungslosen bzw. berührenden Dichtungen - jeweilige Vor- und Nachteile.

Berührende Dichtungen haben eine gewisse definierte Überdeckung zwischen den reibend anliegenden Dichtlippen und der Gegenlauffläche (z. B. dem Lagerinnenring oder der Anlauffläche an einer Welle). Diese Überdeckung ist für eine hohe Dichtwirkung nötig, führt aber zu Reibung und damit zu einer Wärmeentwicklung. Also kommt es zu einer Erwärmung, gegebenenfalls zu einer erhöhten Reibung und schließlich zu Verschleiß zwischen den reibend aneinander liegenden Kontaktpartnern (d. h. zwischen der Dichtlippe und der Gegenlauffläche). Das Dichtlippenmaterial besteht vorzugsweise aus einem Elastomermaterial.

Durch Fertigungstoleranzen des Dichtlippendurchmessers und des Wellendurchmessers variiert die Überdeckung. Diese Varianz ist üblicherweise größer als 0,1 mm. Dies führt nachteilig zu einem unterschiedlichen (Reib)Verhalten der eingebauten Dichtungen aufgrund der Überdeckungsschwankung. Im Allgemeinen eigenen sich diese Dichtungen aber vorteilhafter Weise gut gegen externe Lagerverschmutzung. Weiterhin halten diese Dichtungen in effizienter Weise Schmiermittel zurück, d. h. ein für die Lagerschmierung zum Einsatz kommendes Wälzlagerfett wird gut im Lager zurückhalten; der Austritt von Schmiermittel (Fett) wird minimiert.

Berührungslose Dichtungen (d. h. Spaltdichtungen) dichten indes nicht so gut wie berührende Dichtungen und wirken weniger gut gegen eine mögliche Lagerverschmutzung von außen. Für eine Minimierung des Eintrittes von Verschmutzung in die abgedichtete Stelle muss der Dichtspalt zwischen Dichtungsinnendurchmesser und der Gegenfläche (wie z. B. Lagerinnenring oder Wellenzapfen) möglichst klein gehalten. Dies erfordert nachteilig einen hohen fertigungstechnischen Aufwand bei der Herstellung der genannten Durchmesser, wodurch entsprechend hohe Kosten verursacht werden. Ebenso kann es zum Austritt von Schmierfett aus dem Lager kommen. Dies gilt insbesondere beim Einsatz von niedrigviskosen Wälzlagerfetten. Aufgrund des möglichen Fettaustrittes werden dann derartige und an sich günstige niedrigviskose Lagerfette (insbesondere in Eisenbahnlagersätzen) teilweise nicht eingesetzt, obwohl sie eigentlich hinsichtlich der Schmierfunktion und somit mit Blick auf die Lagergebrauchsdauer und Temperaturentwicklung optimal sind.

Der Erfindung liegt die **Aufgabe** zugrunde, eine Dichtungsanordnung der eingangs genannten Art so auszubilden, dass in allen Betriebszuständen eine optimale Überdeckung bzw. Vorspannung der Dichtlippe an einem abzudichtenden Bauteil, insbesondere an einer Welle, gegeben ist. Demgemäß soll einerseits eine effiziente Dichtung sichergestellt werden. Andererseits soll aber auch bei sich erhöhender Temperatur in der abzudichtenden Anordnung keine übermäßige Reibung zwischen Dichtlippe und abzudichtender Welle entstehen. Somit sollen bei Sicherstellung einer guten Abdichtung minimale Verluste und damit eine Energieeinsparung sowie eine CO₂-Reduzierung erreicht werden. Ferner soll hiermit eine maximale Gebrauchsdauer einer Lagerung erreicht werden.

Die **Lösung** dieser Aufgabe durch die Erfindung ist dadurch gekennzeichnet, dass das temperatursensible Stellelement als Hülse ausgebildet ist, die sich konzentrisch zur Drehachse in axiale Richtung erstreckt, wobei das temperatursensible Stellelement an seinem einen axialen Ende vom Dichtungsgrundkörper gehalten wird, wobei das andere axiale Ende des temperatursensiblen Stellelements frei von einer Befestigung am Dichtungsgrundkörper ist, wobei der Dichtungsgrundkörper einen Halteabschnitt für das temperatursensible Stellelement aufweist, der als umbogener Abschnitt ausgebildet ist, wobei der Halteabschnitt das eine axiale Ende des temperatursensiblen Stellelements oder ein Halteelement umgreift, an dessen Ende das temperatursensible Stellelement befestigt ist.

Das temperatursensible Stellelement ist dabei sogar bevorzugt so angeordnet, dass sich die zweite Dichtlippe bei einer Temperaturerhöhung gar nicht radial vom zweiten Bauteil weg bewegt.

Das temperatursensible Stellelement ist bevorzugt ein Bimetallelement oder es umfasst ein solches.

Die Hülse kann zumindest über einen Teil ihrer axialen Erstreckung über den Umfang mit Schlitzen versehen sein. Hiermit wird die Fähigkeit begünstig, dass sich das temperatursensible Stellelement bei Temperaturerhöhung radial aufweitet.

Der Dichtungsgrundkörper besteht dabei bevorzugt aus einem gebogenen Blechelement. Er kann von elastomerem Material zumindest teilweise ummantelt sein, wobei aus dem Elastomermaterial die Dichtlippen ausgeformt sind.

Das erste Bauteil ist gemäß einer bevorzugten Anwendung ein Gehäuse und das zweite Bauteil eine rotierende Welle.

Der radiale Anlauf der Dichtlippen am zweiten Bauteil kann, wie eingangs erwähnt, direkt oder indirekt sein. Beim direkten Anlauf liegen die Dichtlippen unmittelbar an einer zylindrischen Fläche des zweiten Bauteils (Welle) an. Beim indirekten Anlauf ist auf dem zweiten Bauteil beispielsweise eine Anlaufhülse montiert, an der die Dichtlippen anlaufen.

Ein bevorzugt zum Einsatz kommendes Bimetallelement (auch Thermobimetall genannt) ist ein metallisches Element, bestehend aus zwei Schichten unterschiedlicher Metalle, die miteinander stoffschlüssig oder formschlüssig verbunden sind. Charakteristisch ist die Veränderung der Form bei Temperaturänderung. Diese äußert sich als Verformung (Verbiegung). Die Ursache hierfür ist der unterschiedliche Wärmeausdehnungskoeffizient der verwendeten Metalle. Diese Metalle können zum Beispiel Zink und Stahl oder Stahl und Messing sein. Die beiden Metalle mit unterschiedlichem Längenausdehnungskoeffizienten verlängern sich bei Erwärmung um unterschiedliche Strecken. Verbindet man die beiden Enden der beiden Metallelemente (beispielsweises durch Nieten oder Walzen), führt die unterschiedliche Längenänderung zu einer Verbiegung des Bimetallelements.

Bimetalle werden üblicherweise in Blech- oder Bandform hergestellt. Die blanken, von Oxidschichten freien Metallbleche werden dabei unter Druck aufeinandergewalzt. In der Kontaktzone entsteht durch Kalt- oder Warmverschweißung eine unlösbare Verbindung. Bei einer anderen Ausführung werden die Metallenden deckungsgleich mit Durchgangsbohrungen versehen und miteinander vernietet oder verschraubt.

Es ergibt sich somit erfindungsgemäß eine selbsteinstellende Überdeckung bzw. Vorspannung der an der Welle radial anliegenden Dichtlippen, wobei sich die Überdeckung bzw. Vorspannung mit der Temperatur verändert.

Die erfindungsgemäße Lösung stellt also auf ein berührendes Dichtungskonzept ab, das als passiv geregeltes Dichtungssystem ausgestaltet ist. Die Regelung der radialen Anlagekraft der Dichtlippen an der Welle ergibt sich durch die in der Dichtungsanordnung herrschende Temperatur. Hierzu ist ein temperatursensibles Stellelement, insbesondere ein Bimetallelement, vorgesehen, das die Überdeckung bzw. die radiale Vorspannung der Dichtlippe an der Welle regelt.

Dabei kann eine Hybridbauweise ermöglicht werden, bei der das Bimetallelement in das Elastomermaterial der Dichtung integriert ist. Das Bimetallelement kann dabei aber auch auf das Elastomermaterial der Dichtung aufgesetzt, z. B. aufgeklebt, sein.

Obwohl das Bimetall als temperatursensibles Stellelement bevorzugt ist, kann generell jedes thermoempfindliche Material eingesetzt werden, das bei Temperatureinwirkung seine Form ändert. Im einfachsten Falle kann ein Ring aus einem Material auf die genannten Schenkel des Abschnitts aufgebracht werden, das einen stark unterschiedlichen Wärmeausdehnungskoeffizienten - verglichen mit dem Elastomermaterial der Dichtung - aufweist. Hierdurch kommt bereits bei Temperaturerhöhung der Effekt zustande, dass mindestens eine der Dichtlippen radial von ihrer Gegenlauffläche des abzudichtenden Teils etwas abhebt und so die Überdeckung bzw. die Andruckkraft an der Gegenlauffläche vermindert.

Mit der vorgeschlagenen Lösung wird es möglich, bei Temperaturerhöhung die Überdeckung bzw. den Anpressdruck der Dichtlippe auf der abzudichtenden Gegenfläche zurückzunehmen, so dass die Reibung vermindert werden kann. Hierdurch sind eine Energieeinsparung sowie eine Reduzierung der CO₂-Emission möglich. Des weiteren wird es im gegebenen Falle eine Drehzahlerhöhung möglich, da die Reibung herabgesetzt ist.

In der Folge ergeben sich geringere Kosten über die Gebrauchsdauer der Dichtungsanordnung.

Weiterhin können die Wartungsintervalle verlängert werden, da geringerer Verschleiß zu erwarten ist. Die Dichtungs- und Lagergebrauchsdauer werden somit in vorteilhafter Weise verlängert.

Schließlich ist eine Reduzierung des benötigten Schmierstoffs möglich.

Besonders bevorzugt kommt die vorgeschlagene Dichtungsanordnung für Radlagerungen zum Einsatz, insbesondere in Eisenbahnen und Kraftfahrzeugen.

In der Zeichnung sind Ausführungsbeispiele der Erfindung dargestellt. Es zeigen:
- Fig. 1: den Radialschnitt durch eine Dichtungsanordnung, die zwischen einem Gehäuse und einer rotierenden Welle eingebaut ist, und
- Fig. 2: den Radialschnitt eines Teils der Dichtungsanordnung gemäß einer alternativen Ausgestaltung.

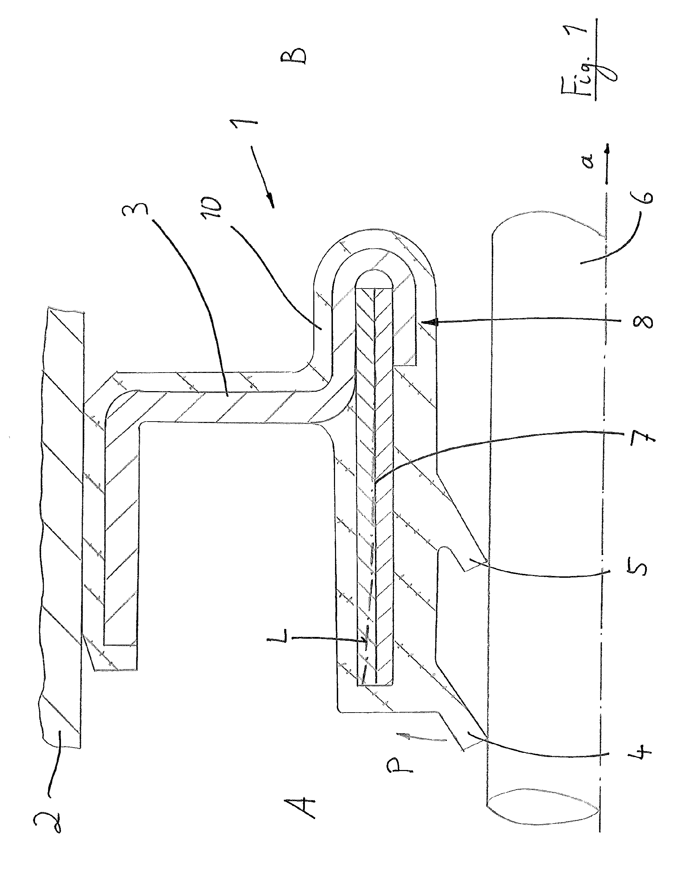

In Fig. 1 ist ein erstes Bauteil 2 in Form eines Gehäuses sowie ein zweites Bauteil 6 in Form einer rotierenden Welle dargestellt. Zwischen dem ersten und zweiten Bauteil ist eine Dichtungsanordnung 1 angeordnet, mit der ein erster Raum A, der beispielsweise mit Schmiermittel gefüllt ist, von einem zweiten Raum B, der die Umgebung sein kann, abgedichtet wird.

Die Dichtungsanordnung 1 weist einen Dichtungsgrundkörper 3 auf, der aus Blech besteht und in der dargestellten Weise per Umformung hergestellt ist; der Dichtungsgrundkörper 3 ist dabei als rotationssymmetrisches Ringelement ausgebildet. Er ist teilweise mit Elastomermaterial 10 ummantelt, wobei aus dem Elastomermaterial vorliegend auch zwei Dichtlippen 4 und 5 ausgebildet werden. Die beiden Dichtlippen 4 und 5 liegen in axiale Richtung a beabstandet an der Welle 6 an.

Wie weiter zu sehen ist, ist der Dichtungsgrundkörper 3 in seinem radial innenliegenden Bereich umbogen, um hier einen Halteabschnitt 8 für ein Bimetallelement 7 zu schaffen, also für ein temperatursensibles Stellelement. Das Bimetallelement 7 ist also in axiale Richtung a in den ausgeformten Halteabschnitt 8 eingeschoben und wird vorliegend so gehalten, dass sich das Bimetallelement 7 (im Radialschnitt betrachtet) in axiale Richtung a erstreckt.

Wesentlich ist, dass das Bimetallelement 7 bei Temperaturerhöhung eine Formänderung erfährt, so dass sich die erste Dichtlippe 4 radial vom zweiten Bauteil 6 weg bewegt, was durch den Pfeil P angedeutet ist, Indes ist das Bimetallelement 7 - wie aus Fig. 1 zu erkennen - so angeordnet ist, dass sich die zweite Dichtlippe 5 weniger weit als die erste Dichtlippe 4 - oder auch gar nicht - radial vom zweiten Bauteil 6 weg bewegt.

In Fig. 1 dargestellt ist die Stellung der Dichtlippe bei Umgebungstemperatur (20 °C). Es ist aber auch die Biegelinie L des Bimetallelements 7 bei erhöhter Temperatur im Betrieb der Dichtungsanordnung angedeutet, die es sofort ersichtlich macht, dass sich die erste Dichtlippe 4 bei einer Temperaturerhöhung sehr viel weiter radial von der Welle 6 weg bewegt - und gegebenenfalls sogar von dieser abhebt -, als es für die zweite Dichtlippe 5 gilt.

Die Beweglichkeit des vorzugsweise hülsenförmig bzw. hohlzylindrisch ausgebildeten Bimetallelements 7 bei Temperaturerhöhung kann durch über den Umfang des Bimetallelements 7 eingearbeitete (nicht dargestellte) Schlitze erhöht werden. Dabei ist es möglich, die Schlitze zwecks Verbesserung besagter Beweglichkeit nur in einem axialen Bereich des Bimetallelements 7 (nämlich in Fig. 1 in der linken Hälfte des Bimetallelements 7) einzubringen, was zur Folge hat, dass sich im wesentlichen nur die Dichtlippe 4 bei Temperaturerhöhung bewegt; die rechte Hälfte des Bimetallelement 7, die schlitzfrei gehalten ist, verändert dann bei Temperaturerhöhung nicht bzw. kaum die Form, so dass die zweite Dichtlippe 5 im wesentlichen in der dargestellten Lage verbleibt.

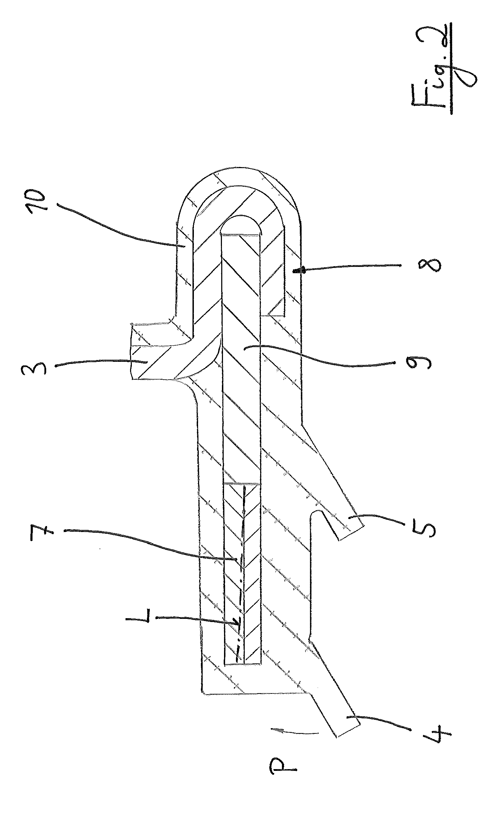

In Fig. 2 ist eine Alternative dargestellt, bei der darauf abgestellt ist, dass das Bimetallelement 7 kürzer ausgeführt ist und an einem hohlzylindrisch ausgeformten Halteelement 9, bevorzugt aus Stahl, befestigt (z. B. angelötet) ist. Das Halteelement 9 wird dann vom Halteabschnitt 8 des Dichtungsgrundkörpers 3 gefasst und gehalten. Somit ergibt sich, dass praktisch nur die erste Dichtlippe 4 bei Temperaturerhöhung von der Welle 6 abhebt, während die zweite Dichtlippe 5 ihre Position in diesem Falle nicht ändert.

Die Dichtlippen 4, 5 und namentlich deren an der Welle 6 anlaufenden Endkanten selber können sehr präzise durch Abstechen mittels eines (nicht dargestellten) Stechmessers geformt werden. Die Formtoleranz kann herbei in einem Bereich von +/- 0,15 mm gehalten werden.

Mit der vorgeschlagenen Ausgestaltung wird erreicht, dass das temperatursensibles Stellelement 7 dafür Sorge trägt, dass bei einer Temperaturerhöhung der Dichtungsanordnung weitgehend nur die erste Dichtlippe 4 von der Welle radial abgezogen wird und im Grenzfall auch den Kontakt mit der Welle 6 vollständig verlieren kann.

Indes wird die zweite Dichtlippe 5 nur geringfügig oder gar nicht radial von der Welle 6 abgezogen, so dass die Dichtigkeit der Dichtungsanordnung in jedem Falle sichergestellt ist. Allerdings nimmt vorteilhaft die Reibung im Betrieb merklich ab.

Die vorgeschlagene Dichtungsanordnung kann als separate Einheit zwischen Gehäuse und Welle montiert werden.

Es ist aber auch möglich, dass sie in ein Wälzlager integriert wird; dann laufen die Dichtlippen 4 und 5 an einem der Lagerringe an.

### Bezugszeichenliste

- 1: Dichtungsanordnung
- 2: erstes Bauteil (Gehäuse)
- 3: Dichtungsgrundkörper (aus Blech)
- 4: erste Dichtlippe
- 5: zweite Dichtlippe
- 6: zweites Bauteil (Welle)
- 7: temperatursensibles Stellelement (Bimetallelement)
- 8: Halteabschnitt
- 9: Halteelement (aus Stahl)
- 10: Elastomermaterial

- A: erster Raum
- B: zweiter Raum
- P: Pfeil
- a: axiale Richtung
- L: Biegelinie bei erhöhter Temperatur

## Patentansprüche

1. Dichtungsanordnung (1) zur Abdichtung eines ersten Raums (A) gegenüber einem zweiten Raum (B), wobei die Dichtungsanordnung (1) einen an einem ersten Bauteil (2) angeordneten Dichtungsgrundkörper (3) aufweist, wobei der Dichtungsgrundkör-per (3) mindestens zwei Dichtlippen (4, 5) trägt, wobei die Dichtlippen (4, 5) zum di-rekten oder indirekten radialen Anlauf an einem zweiten Bauteil (6) ausgebildet sind und wobei das zweite Bauteil (6) eine Drehachse mit einer axialen Richtung (a) auf-weist, wobei die erste Dichtlippe (4) und die zweite Dichtlippe (5) in axiale Richtung (a) voneinander beanstandet am zweiten Bauteil (6) anlaufen, wobei im Dichtungs-grundkörper (3) mindestens ein temperatursensibles Stellelement (7) angeordnet ist, das bei Temperaturerhöhung eine Formänderung erfährt, so dass sich zumindest die erste Dichtlippe (4) radial vom zweiten Bauteil (6) weg bewegt, wobei das tempera-tursensibles Stellelement (7) so angeordnet ist, dass sich die zweite Dichtlippe (5) weniger weit als die erste Dichtlippe (4) radial vom zweiten Bauteil (6) weg bewegt,
**dadurch gekennzeichnet,**
**dass** das temperatursensible Stellelement (7) als Hülse ausgebildet ist, die sich konzentrisch zur Drehachse in axiale Richtung (a) erstreckt, wobei das temperatursensible Stellelement (7) an seinem einen axialen Ende vom Dichtungsgrundkörper (3) ge-halten wird, wobei das andere axiale Ende des temperatursensiblen Stellelements (7) frei von einer Befestigung am Dichtungsgrundkörper (3) ist, wobei der Dichtungs-grundkörper (3) einen Halteabschnitt (8) für das temperatursensible Stellelement (7) aufweist, der als umbogener Abschnitt ausgebildet ist, wobei der Halteabschnitt (8) das eine axiale Ende des temperatursensiblen Stellelements (7) oder ein Halteelement (9) umgreift, an dessen Ende das temperatursensible Stellelement (7) befestigt ist.

2. Dichtungsanordnung nach Anspruch 1, **dadurch gekennzeichnet, dass** das temperatursensible Stellelement (7) so angeordnet ist, dass sich die zweite Dichtlippe (5) gar nicht radial vom zweiten Bauteil (6) weg bewegt.

3. Dichtungsanordnung nach Anspruch 1 oder 2, **dadurch gekennzeichnet, dass** das temperatursensible Stellelement (7) ein Bimetallelement ist oder ein solches umfasst.

4. Dichtungsanordnung nach einem der Ansprüche 1 bis 3, **dadurch gekennzeichnet, dass** die Hülse zumindest über einen Teil ihrer axialen Erstreckung über den Umfang mit Schlitzen versehen ist.

5. Dichtungsanordnung nach einem der Ansprüche 1 bis 4, **dadurch gekennzeichnet, dass** der Dichtungsgrundkörper (3) aus einem gebogenen Blechelement besteht.

6. Dichtungsanordnung nach einem der Ansprüche 1 bis 5, **dadurch gekennzeichnet, dass** der Dichtungsgrundkörper (3) von elastomerem Material zumindest teilweise ummantelt ist, wobei aus dem Elastomermaterial die Dichtlippen (4, 5) ausgeformt sind.
